## Europäisches Patentamt
## European Patent Office
## Office européen des brevets

(19)

(11) Veröffentlichungsnummer: **0 008 631**
**B1**

(12) **EUROPÄISCHE PATENTSCHRIFT**

(45) Veröffentlichungstag der Patentschrift:
**12.05.82**

(51) Int. Cl.³: **B 23 C 5/08**, B 23 C 5/26 //
**B23C3/06**

(21) Anmeldenummer: **79102318.7**

(22) Anmeldetag: **09.07.79**

(54) **Satzfräser.**

(30) Priorität: **19.08.78 DE 2836395**

(43) Veröffentlichungstag der Anmeldung:
**19.03.80 Patentblatt 80/6**

(45) Bekanntmachung des Hinweises auf die Patenterteilung:
**12.05.82 Patentblatt 82/19**

(84) Benannte Vertragsstaaten:
**AT CH FR GB IT SE**

(56) Entgegenhaltungen:
**DE-A1-2 630 047**
**DE-B-1 181 526**
**DE-C-720 072**
**DE-C-830 837**
**US-A-2 650 522**

(73) Patentinhaber: **Gebr. Heller Maschinenfabrik GmbH,
Postfach 1428, D-7440 Nürtingen (DE)**

(72) Erfinder: **Schmid, Karlheinz, Amselweg 2,
D-7441 Neckartenzlingen (DE)**

(74) Vertreter: **Reinländer & Bernhardt Patentanwälte,
Orthstrasse 12, D-8000 München 60 (DE)**

## Satzfräser

Die Erfindung betrifft einen Satzfräser nach dem Oberbegriff des Anspruchs 1.

Solche Satzfräser sind bekannt. Sie weisen einen Fräsdorn (DE-A1-2 630 047; DE-C-720 072) oder eine Innenhülse (US-A-2 650 522) auf, der bzw. die wenigstens einen Teil des Antriebsdrehmoments von der dieses liefernden Frässpindel bis zum freien Ende des Satzfräsers überträgt. Auf diesem Fräsdorn bzw. dieser Innenhülse sind die Scheibenfräser und die als Ringe ausgeführten Abstandsmittel festgelegt, derart, daß der bis zum freien Ende übertragene Teil des Antriebsdrehmoments in den dem freien Ende benachbarten Scheibenfräser eingeleitet wird. Die ganze Einheit ist verspannt; dazu kann eine Zentralverschraubung dienen (DE-A1-2 630 047; DE-C-720 072) oder es werden durchgehende Bolzen verwendet (US-A-2 650 522), wobei die Übertragung des Antriebsdrehmoments vom Fräsdorn bzw. von der Innenhülse an den dem freien Ende benachbarten Scheibenfräser durch Federkeile unterstützt werden kann (DE-C-720 072; US-A-2 650 522). Zur Entlastung des Fräsdorns kann auch zusätzlich eine Drehmomentübertragung zwischen den Scheibenfräsern und Abstandsmitteln über Mitnehmerstifte vorgesehen sein.

Bei diesen Satzfräsern ist ein gewisses Spiel zwischen dem Fräsdorn einerseits und den einzelnen Scheibenfräsern andererseits, aber auch zwischen den Scheibenfräsern und den jeweils benachbarten Abstandsmitteln sowie zwischen Satzfräserteilen und eventuell vorhandenen formschlüssigen Verbindungsmitteln unvermeidbar. Durch die Wechselbeanspruchung, die sich durch das Ein- und Austreten der einzelnen Fräserschneiden in das bzw. aus dem Werkstück ergibt, werden zunächst die einzelnen Scheibenfräser in Schwingungen in Umfangsrichtung um ihre mittlere Lage relativ zum Fräsdorn versetzt, so daß sie sich innerhalb des obengenannten, unvermeidbaren Spiels relativ zum Fräsdorn bewegen; dadurch wird aber auch der Fräsdorn seinerseits in Schwingungen versetzt und bewegt sich relativ zu den Scheibenfräsern und Abstandsmitteln. Da Schwingungen des einen Scheibenfräsers regelmäßig nicht kohärent zu denen der anderen Scheibenfräser des gleichen Satzfräsers sind, bewegen sich die einzelnen Scheibenfräser auch relativ zueinander und damit relativ zu den zwischen ihnen angeordneten Abstandsmitteln, wieder innerhalb des unvermeidbaren Spiels. Dieses Spiel liegt zwar normalerweise nur in der Größenordnung von Bruchteilen eines Mikrometers, es entsteht jedoch an den aneinander reibenden Flächen schon nach kurzer Betriebszeit Abrieb, der schnell oxydiert und dann als »Passungsrost« bezeichnet wird, und durch den der Werkzeugwechsel sehr erschwert bzw. zum Teil ohne Beschädigung der Teile gar nicht möglich wird und der zu erhöhten Bearbeitungsungenauigkeiten führt. Zum Verspannen der Zentralverschraubung oder von sich über die ganze Fräslänge erstreckenden Bolzen wird überdies vor allem bei langen Satzfräsern ein sehr hohes Anzugsdrehmoment benötigt, wofür aufwendige Anzugsvorrichtungen erforderlich sind.

Eine gewisse Ähnlichkeit mit Satzfräsern mit durchgehendem Dorn haben zusammengesetzte Fräsköpfe, wie sie für die holzverarbeitende Industrie Verwendung finden. Bei diesen Fräsköpfen ist es bekannt, das Profilmesser von mehreren Fräsköpfen tragen zu lassen, die ihrerseits auf eine Frässpindel aufgesetzt werden, wobei sie ohne Zwischenschaltung von Abstandsringen od. dgl. mit ausgedrehten Stufen zueinander zentriert werden (DE-C-830 837).

Aufgabe der Erfindung ist es, einen Satzfräser der eingangs genannten Art verfügbar zu machen, der mit geringerem Aufwand hergestellt werden kann und trotzdem eine bessere Schwingungssteifigkeit hat, so daß sich eine größere Genauigkeit und höhere Standzeit des Satzfräsers ergeben und insbesondere der Passungsrost vermieden wird. Erfindungsgemäß wird diese Aufgabe durch die im Kennzeichenteil des Anspruchs 1 aufgeführten Maßnahmen gelöst.

Eine spezielle Ausgestaltung der Erfindung ergibt sich aus Anspruch 2.

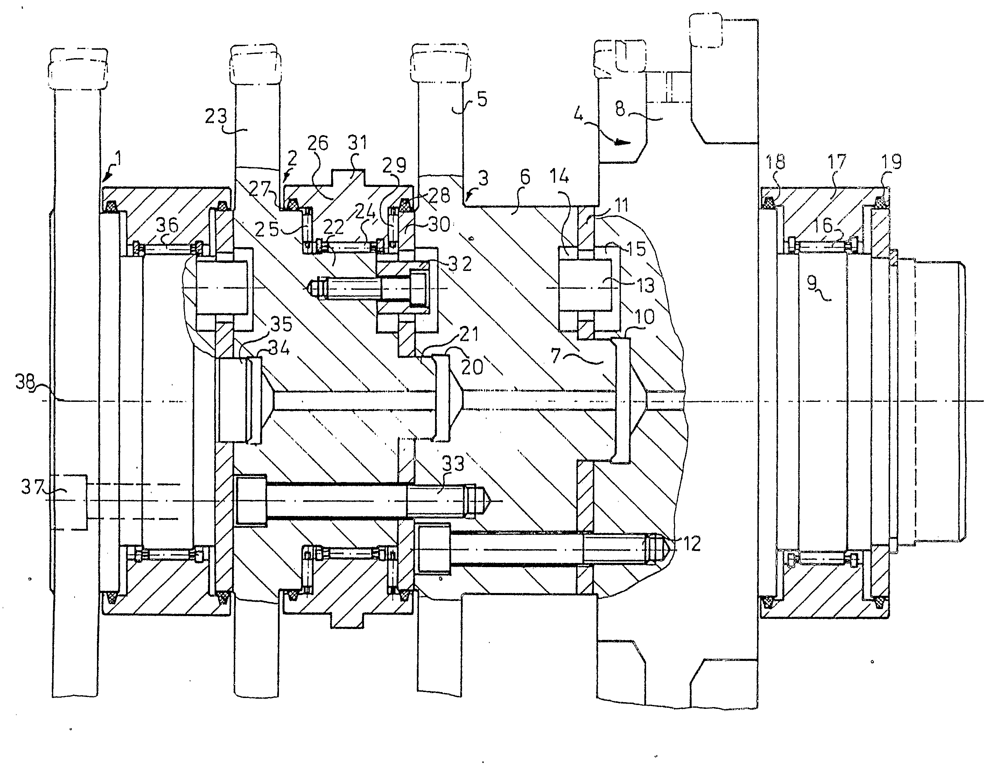

Die Erfindung soll anhand der Zeichnung näher erläutert werden, in der ein Längsschnitt durch einen erfindungsgemäßen Satzfräser dargestellt ist.

Der dargestellte Satzfräser besteht aus vier Teileinheiten 1, 2, 3 und 4. Die Teileinheit 3 weist einen Scheibenfräser 5 und einen zentrischen, trommelförmigen Ansatz 6 auf, der seinerseits einen zentrischen Paßdorn 7 trägt. Die der Teileinheit 3 rechts benachbarte Teileinheit 4 weist ebenfalls einen Scheibenfräser 8 auf, der entsprechend der durch ihn zu bearbeitenden Bearbeitungsstelle anders geformt ist als der Scheibenfräser 5, einen zentrischen, trommelförmigen Ansatz 9 sowie eine dem Paßdorn 7 der Einheit 3 entsprechende Paßbohrung 10. Zwischen den Teileinheiten 3 und 4 befindet sich eine Abstimmscheibe 11, mit der der Abstand der beiden Scheibenfräser 5 und 8 genau festgelegt ist. Die beiden Teileinheiten 3 und 4 sind mit vorzugsweise vier Schraubbolzen miteinander verbunden, von denen der Übersichtlichkeit halber nur ein einziger bei 12 dargestellt ist. In der bevorzugten Ausführungsform übertragen diese Schrauben lediglich Axialkräfte, Drehmomente werden durch zwei Mitnehmersteine übertragen, von denen, ebenfalls der Übersichtlichkeit halber, in der Zeichnung nur einer bei 13 dargestellt ist. Diese Mitnehmersteine passen in üblicher Weise in entsprechende Aussparungen in den beiden Teileinheiten 3 und 4, wie sie bei 14 bzw. 15 dargestellt sind, in der Weise, daß in Umfangsrichtung die Verbindung spielfrei ist, in radialer und axialer Richtung dagegen Spiel vorhanden ist, wie dargestellt.

Der trommelförmige Ansatz 9 der Teileinheit 4 ist, abweichend vom trommelförmigen Ansatz 6 der Teileinheit 3 als innerer Lagerring eines Nadellagers 16 ausgebildet, der Vollständigkeit halber ist der äußere Lagerring 17 des Nadellagers 16 mit den Lagerdichtungen 18 und 19 ebenfalls dargestellt, obwohl dieser natürlich streng genommen nicht mehr zum Satzfräser gehört. Bei der Montage des Satzfräsers wird dieser jedoch zweckmäßigerweise gleich mit aufgezogen und später am zugehörigen Lagerträger festgelegt.

Auf der freien Seite des trommelförmigen Ansatzes 9 ist eine nicht näher dargestellte Einrichtung zur Ankupplung an die Antriebsspindel der Fräsmaschine vorgesehen; diese stellt keinen Teil der Erfindung dar.

Die Teileinheit 3 weist auf der der Teileinheit 4 abgewandten Seite ebenfalls eine Paßbohrung 20 auf, in die ein Paßdorn 21 der Teileinheit 2 paßt. Dieser Paßdorn 21 sitzt, wie auch der Paßdorn 7 der Teileinheit 3, auf einem zentralen, trommelförmigen Ansatz 22, der von einem Scheibenfräser 23 hervorsteht, der praktisch genauso aufgebaut ist wie der Scheibenfräser 5 der Teileinheit 3. Der trommelförmige Ansatz 22 ist einerseits als Lagerring eines Radialnadellagers 24 ausgebildet, und andererseits als Lauffläche eines Axiallagers 25. Ein entsprechender äußerer Lagerring 26 weist entsprechende Laufflächen auf und trägt, wie der äußere Lagerring 17, zwei Dichtungen 27 und 28. Der äußere Lagerring 26 weist noch eine weitere Lauffläche für ein zweites Axiallager 29 auf, dessen Gegenlagerfläche aus der zur Teileinheit 2 weisenden Seite eines Abstimmringes 30 besteht, der zwischen die Einheiten 2 und 3 geschaltet ist, um den Abstand der Scheibenfräser 23 und 5 exakt festzulegen. Bei der Montage dieses Ringes ist zu beachten, daß dieser nur auf der zur Teileinheit 3 weisenden Seite abgestimmt werden darf, um die Lagerfläche zu erhalten.

Der äußere Lagerring 26 weist einen Umfangsvorsprung 31 auf, mit dem er, und damit die Axiallager 25 und 29 und damit wiederum der ganze Satzfräser in axialer Richtung zentriert werden kann, indem dieser Vorsprung in üblicher Weise in eine entsprechende Paßnut im Lagerträger eingreift.

Die Teileinheiten 2 und 3 sind in der gleichen Weise miteinander verbunden wie die Teileinheiten 3 und 4, das heißt Drehmomente werden durch Mitnehmersteine wie 32 übertragen, axial sind die beiden Einheiten durch gleichmäßig um den Umfang verteilte Schraubbolzen miteinander verbunden, von denen wieder der Übersichtlichkeit halber nur einer bei 33 dargestellt ist. Die Schraubbolzen wie 33 sind radial gegen die Schraubbolzen wie 12 nach einwärts versetzt.

Die Teileinheit 2 weist auf der der Teileinheit 3 abgewandten Seite wieder eine Paßbohrung 34 auf, in die ein Paßdorn 35 der Teileinheit 1 paßt. Diese ist im wesentlichen genauso aufgebaut wie die Teileinheit 2, so daß nähere Erläuterungen überflüssig sind, nur daß weder eine Paßbohrung noch Axiallager vorgesehen sind, sondern lediglich ein Radialnadellager 36, das genauso aufgebaut ist wie das Radialnadellager 16, so daß auch hierzu nähere Erläuterungen überflüssig sind. Die Teileinheiten 1 und 2 sind ebenfalls mit Schraubbolzen miteinander verbunden, von denen einer schematisch bei 37 dargestellt ist. Der Bolzen 37 hat die gleiche Entfernung von der Fräswerkzeugachse 38 wie der Bolzen 33, ist jedoch winkelmäßig gegen den Bolzen 33 versetzt.

Anstelle der Paßdorne 7, 21, 35 und der zugehörigen Sack-Paßbohrungen 10, 20, 34 können ersichtlich auch andere zentrisch angeordnete Zentriermittel vorgesehen werden, wie etwa ein sich über die ganze Länge des Fräswerkzeuges erstreckender zentrischer Paßdorn in Verbindung mit durchgehenden Paßbohrungen. Grundsätzlich sind auch außermittige Zentriermittel, etwa entsprechend den Mitnehmersteinen, geeignet, da aber einerseits bei unterschiedlicher Belastung der verschiedenen Fräser solche außermittigen Zentriermittel in der Regel ebenfalls belastet würden und andererseits eine Zentrierung in Umfangsrichtung nicht nötig ist, werden zentrisch angeordnete Zentriermittel bevorzugt.

Durch die erfindungsgemäße Mehrfachbefestigung von Teileinheiten aneinander ergibt sich eine wesentlich schwingungssteifere Konstruktion als der bekannte Satzfräseraufbau mit Fräsdorn und auf diesen aufgezogenen Scheibenfräsern und Zwischenbuchsen. Dadurch ergibt sich einerseits eine erheblich größere Genauigkeit und Standzeit als bei bekannten Satzfräsern dieser Art, darüber hinaus aber auch die Möglichkeit, die axiale Zentrierung des Satzfräsers unmittelbar am Satzfräser selbst vorzunehmen, nämlich durch die Axiallager 25 und 29 in Verbindung mit dem Paßvorsprung 31, so daß die Axiallagerung nicht mehr, wie bisher, in der Antriebsspindel vorgenommen werden muß, so daß der Abstand der einzelnen Scheibenfräser von dem für die axiale Zentrierung maßgeblichen Punkt im Mittel erheblich kleiner wird, so daß Wärmedehnungen des Satzfräsers auf die Genauigkeit des Abstandes der einzelnen Scheibenfräser einen erheblich geringeren Einfluß haben als bei den bekannten Satzfräsern.

## Patentansprüche

1. Satzfräser zur Bearbeitung von Kurbelwellen, der im Frässchlitten einer Kurbelwellenfräsmaschine drehantreibbar gelagert ist und der mehrere durch Abstandsmittel (6, 9, 23) in axialem Abstand voneinander gehaltene Scheibenfräser (5, 8, 23) aufweist, wobei eines oder mehrere der Abstandsmittel (6, 9, 22) als Lagerstellen ausgebildet ist bzw. sind, dadurch gekennzeichnet, daß er aus einer der Anzahl der Scheibenfräser (5, 8, 23) entsprechenden Anzahl von axial aufeinanderfolgenden Teileinheiten (1, 2, 3, 4) ohne Verwendung eines gemeinsamen, von einem Ende des Satzfräsers zum anderen Antriebsdrehmoment übertragenden Bauteils zusammengesetzt ist, die jede aus einem Scheibenfräser (5, 8, 23) mit einem zentrischen, trommelförmigen Ansatz (6, 9, 22) bestehen, wobei benachbarte Teileinheiten (1, 2, 3, 4) zueinander zentriert und aneinander befestigt sind, und zwischen zwei benachbarten Teileinheiten (1, 2, 3, 4) jeweils eine Abstimmscheibe (11, 30) angeordnet ist, und daß eine der Anzahl der Lagerstellen entsprechende Anzahl von trommelförmigen Ansätzen (9, 22) als Lagerringe ausgebildet sind bzw. Lagerringe tragen.

2. Satzfräser nach Anspruch 1, dadurch gekennzeichnet, daß Zentriermittel (7, 10, 20, 21, 34, 35) zentrisch angeordnet sind und daß benachbarte Teileinheiten (1, 2, 3, 4) jeweils mit um die Zentriermittel herum gleichmäßig verteilten Schrauben (12, 33, 37) verbunden sind, wobei die Schraubverbindungen einer Teileinheit mit der auf ihrer einen Seite benachbarten Teileinheit gegen die Schraubverbindungen mit der auf ihrer anderen Seite benachbarten Teileinheit radial und/oder winkelmäßig versetzt sind.

## Claims

1. Gang cutter for machining crankshafts, which is supported in the milling slide of a crankshaft milling machine in a manner to be rotatably driven and which includes a plurality of side-milling cutters (5, 8, 23) axially spaced by spacer means (6, 9, 22), one or more af said spacer means (6, 9, 22) being designed as bearing means, characterized in that it comprises a plurality of partial units (1, 2, 3, 4) the number of which corresponds to the number of side-milling cutters (5, 8, 23) and which are assembled in axial succession without using a common member transmitting driving torque from one end of the gang cutter to the other, which partial units each comprise a side-milling cutter (5, 8, 23) having a central, drum shaped projection (6, 9, 22), adjacent partial units (1, 2, 3, 4) being centered with respect to each other and affixed one to the other, and an adjustment disc means (11, 30) being resprectively disposed between two adjacent partial units (1, 2, 3, 4), and that a number of drum shaped projections (9, 22) corresponding to the number of the bearings are designed as bearing rings or carry bearing rings, respectively.

2. Gang cutter according to claim 1, characterized in that centering means (7, 10, 20, 21, 34, 35) are centrally disposed and that adjacent partial units (1, 2, 3, 4) are connected in each case by screws (12, 33, 37) distributed uniformly about said centering means, the screw connections of one partial unit to a partial unit adjacent on its one side being radially and/or angularly displaced with respect to the screw connections to the partial unit adjacent its opposite side.

## Revendications

1. Fraise composée destinée à l'usinage de vilebrequins, qui est monté rotative sur le chariot de fraisage d'une fraiseuse de vilebrequins et qui présente plusieurs fraises (5, 8, 23) à disque maintenues par des entretoises (6, 9, 23) à distance les unes des autres suivant l'axe, l'une ou plusieurs des entretoises (6, 9, 22) étant agencée(s) en points d'appui, caractérisée en ce qu'elle est composée d'un nombre d'unités (1, 2, 3, 4) partielles se succédant sur l'axe égal au nombre de fraises (5, 8, 23) à disque, sans utilisation d'une pièce commune transmettant le couple de rotation d'entraînement de l'une des extrémités de la fraise composée à l'autre, chacune de ces unités partielles étant constituée d'une fraise (5, 8, 23) à disque ayant un prolongement (6, 9, 22) central en forme de portée cylindrique, les unités (1, 2, 3, 4) partielles voisines étant centrées l'une par rapport à l'autre et étant fixées l'une à l'autre et, entre deux unités (1, 2, 3, 4) partielles voisines est interposée respectivement une rondelle (11, 30) d'ajustage, und nombre de prolongements (9, 22) en forme de portée cylindrique, correspondant au nombre de points d'appui, étant agencé en portées cylindriques de roulement ou étant muni d'anneaux de roulement.

2. Fraise composée suivant la revendication 1, caractérisée en ce que des moyens (7, 10, 20, 21, 34, 35) de centrage sont disposés de manière centrale et des unités (1, 2, 3, 4) partielles voisines sont reliées par des boulons (12, 33, 37) réparties de manière uniforme autour des moyens de centrage, les boulonnages d'une unité partielle avec l'unité partielle voisine se trouvant d'un côté étant décalées radialement et/ou angulairement par rapport aux boulonnages avec l'unité partielle voisine se trouvant de l'autre côté.

0 008 631